(19) **Europäisches Patentamt** **European Patent Office** **Office européen des brevets**

(11) **EP 4 680 929 B1**

(12) **EUROPEAN PATENT SPECIFICATION**

(45) Date of publication and mention of the grant of the patent:
**10.06.2026 Bulletin 2026/24**

(21) Application number: **24710759.2**

(22) Date of filing: **14.03.2024**

(51) International Patent Classification (IPC):
**G01M 11/02** (2006.01)  **G01J 3/46** (2006.01)
**G02C 7/10** (2006.01)

(52) Cooperative Patent Classification (CPC):
**G01M 11/0285; G01J 3/462; G02C 7/105;**
G01J 2003/467

(86) International application number:
**PCT/EP2024/056871**

(87) International publication number:
**WO 2024/189165 (19.09.2024 Gazette 2024/38)**

(54) **METHOD FOR GRADIENT SPECTACLE LENS EVALUATION AND CORRESPONDING DEVICE**

VERFAHREN ZUR BEURTEILUNG VON GRADIENTENBRILLENGLÄSERN UND ENTSPRECHENDE VORRICHTUNG

PROCÉDÉ APPROPRIÉ POUR L'ÉVALUATION DE VERRES DE LUNETTES À GRADIENT ET DISPOSITIF CORRESPONDANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.03.2023 EP 23161709**

(43) Date of publication of application:
**21.01.2026 Bulletin 2026/04**

(73) Proprietor: **Carl Zeiss Vision International GmbH 73430 Aalen (DE)**

(72) Inventors:
• **SEMERARO, Filippo**
  **21043 Castiglione Olona (IT)**
• **BOARETTO, Matteo**
  **21043 Castiglione Olona (IT)**
• **MALNATI, Sabrina**
  **21043 Castiglione Olona (IT)**

(74) Representative: **Kraus & Lederer PartGmbB Thomas-Wimmer-Ring 15 80539 München (DE)**

(56) References cited:
**DE-A1- 102013 003 558     JP-A- 2004 326 018 JP-A- 2009 109 442**

• **ANONYMOUS: "ISO 12311:2013 Personal protective equipment - Test methods for sunglasses and related eyewear", ISO NORM, ISO, CH, 15 November 2013 (2013-11-15), pages 1 - 85, XP055920725, Retrieved from the Internet <URL:https://www.iso.org/standard/51350.html> [retrieved on 20220512]**
• **ANONYMOUS: "ISO 12312-1:2013 Eye and face protection -- Sunglasses and related eyewear -- Part 1: Sunglasses for general use", ISO NORM, ISO, CH, vol. ISO 12312-1:2013, 1 August 2013 (2013-08-01), pages 1 - 23, XP009506486**

**Description**

The present application relates to computer-implemented methods for evaluation of gradient spectacle lenses and relates to corresponding devices.

Gradient spectacle lenses are lenses which do not have a uniform color, but which have varying color over their surface. Such gradient spectacle lenses may for example be used for sunglasses and typically include one or more darker areas having lower light transmission and one or more lighter areas having higher light transmission. For example, in one type of gradient spectacle lenses for sunglasses, when the sunglasses are worn, the upper part (towards the top of the head in the as worn position), referred to as top part or simply as top, is darker and the lower part, referred to as bottom part or bottom, is lighter, with a transition area inbetween.

When producing such gradient spectacle lenses, e.g. for sunglasses, it is desirable to evaluate if the coloring has been applied to the lenses as per requested specifications, e.g. at the correct position and/or with right width of gradient.

For example, in a typical production process, a production tinting bath is programmed according to a target gradient and the lenses are subjected to a coloring bath accordingly. Then, the actual gradient color applied to the lens is measured and compared with the target, and if the measured gradient does not sufficiently correspond to the target, the lens may be rejected, and/or the production process may be adapted.

Conventionally, the width of gradient color on the lens is measured through visual observation of the lens on a light box with the help of a special ruler. This leads to some amount of subjectivity of the observation, for example the question where the gradient starts and ends precisely. For example, the human eye is limited as regards detecting small color variations, which may lead to different measurements depending on the operator being performing the measurements.

The Smart Shade device which used to be provided by Smart Vision, but is no longer on the market, was a special device to analyze gradient of spectacle lenses and which returned a percentual match of surface area with respect to a master gradient lens, without giving any further information on the measured lens. The master gradient lens was a lens which was regarded as a target design, i.e. taken as a lens specimen manufactured as desired.

Therefore, even if defective lenses could be identified due to a low percentage of surface area matching, it was for example difficult to adapt the production based on this result alone, as no further information could be obtained (e.g. width of darker, transition and clearer areas and positioning on the lens of these areas). Moreover, it was necessary to identify a reference point on the lens under examination for the measurement and if this reference point was not exactly the same between master lens and sample lens, the Smart Shade device was unable to identify it.

Starting from this conventional solution for automatic lens measurement, it is an object underlying the present invention to provide an improved method for evaluating gradient spectacle lenses which is able to give more information about the gradient, for example position of the gradient, and which may be applied to different types of gradient lenses.

"ISO 12311:2013 Personal protective equipment - Test methods for sunglasses and related eyewear" in section 7.2.1.1 describes measurement of uniformity of luminous transmittance for filters with bands or gradients of different luminous transmittance.

"ISO 12312-1:2013 Eye and face protection - Sunglasses and related eyewear - Part 1: Sunglasses for general use" in section 5.3 describes general transmittance requirements.

JP 2009 109442 A describes an eyeglass lens stain inspection method, apparatus, and an eyeglass lens manufacturing method including a point-wise comparison of color and/or luminosity.

JP 2004 326018 A describes a plastic lens dyeing method and ink for plastic lens dyeing used in the method, where for non-gradient tinted lenses color differences $\Delta E$ are calculated between a plurality of pairs of measurement points.

DE 10 2013 003558 A1 describes a device and a method for the assessment of the coloring of spectacle lenses, also including a point-wise comparison of color and/or luminosity.

Starting from the background art, it is an object underlying the present invention to provide an improved method for evaluating gradient spectacle lenses.

According to the invention, a computer-implemented method for evaluating a gradient spectacle lens is provided, comprising receiving measurement data indicating at least one of color and transmission at a plurality of measurement points along at least one lines across the gradient spectacle lens, wherein the at least one line coincides with a gradient direction of the gradient spectacle lens,

calculating scalar values representing a difference between the measurement data of adjacent or overlapping measurement point groups, each measurement point group including at least one measurement point of the plurality of measurement points, and evaluating the gradient spectacle lens based on the scalar value.

The method is characterized in that the scalar values form a curve representing a function along a length direction of the at least one line, and in that evaluating the gradient spectacle lens comprises comparing the curve of scalar values to at least one threshold value and comparing positions along the length direction of the at least one line where the curve of scalar values crosses the at least one threshold to nominal values.

The receiving of the measurement data may for example be done by uploading the measurement data to a computer performing the method or to a storage like cloud storage accessible by the computer.

By providing the scalar values, a quantitative evaluation of the gradient spectacle lens is facilitated, as the magnitude of the scalar values directly correlate to the gradient: high scalar value represents a large difference between the measurement data of the adjacent measurements point groups and therefore a large gradient, while low scalar values conversely represent a low gradient.

A scalar is a value which may be represented by a single real number. In contrast, the measurement data indicating color contains a plurality of values per measurement points. To represent a color, at least three values are typically used. For example, the color may be represented in the RGB (red, green, blue) system with three values. Other systems for representing the color may also be used, like the L*a*b color space or the CMY color space. In such cases, the measurement data for each point may be represented as a vector having typically at least three components, which makes an analysis directly based on the measurement data more difficult than the scalar values.

A measurement point group includes one or more measurement points of the plurality of measurement points. For example, in case the at least one line across the spectacle lens is a single line, each group may include one or more adjacent points along the line. Two point groups are adjacent if they immediately follow each other along the direction of the at least one line without having common measurement points, and are overlapping if they include common measurement points. For example, in case of a single line, when each point group includes three measurement points, the group may advance by two points from group to group, such that two successive groups overlap at one point. These are merely some numerical examples. Including more than one measurement point in each point group has the advantage of some smoothing or averaging effects, such that measurement tolerances of the individual measurement points may be a statistical average.

The at least one line may also include two or more parallel lines. In this case, each measurement point group may include one or more points of each line, wherein the points for each line have the same position along a direction of the lines. For example, in some embodiments between three and seven lines, for example five lines, may be used. A higher number of lines may increase a measurement time needed for capturing the measurement data but may increase the above-mentioned averaging effect and make the measurement more precise. A number of lines between three and seven lines is a good compromise between accuracy of measurement and measurement time required.

Measurement point groups are overlapping if they share one or more measurement points. The term "difference between the measurement data of adjacent or overlapping measurement point groups" also covers cases where more than two measurement point groups are used for calculating the scalar values.

The scalar values essentially constitute a function along the length direction of the at least one line, which may be evaluated in various ways. This function, in other words, represents the scalar values over the position along the line.

In case the measurement data indicates the color, calculating the scalar values may be performed using so-called $\Delta E_{CMC}(1:1)$ values. This approach is for example defined in ASTM standard D2244-22 (see in particular equations (21) and (22) thereof), and additional information may be found in ASTM E308-99. The $\Delta E_{CMC}(1:1)$ metric defined in the standard has the advantage of providing a standardized and well-understood metric for the color difference. For this, if the measurement data is already the LCh color space (lightness, Chroma and hue), and $\Delta E_{CMC}(1:1)$ may be calculated then based on the standard equations given by the standard. If the color is measured in terms of RGB, the conversion to LCh may be via the L*a*b color space defined in EN ISO 116464-4. Other scalar values, also defined in the above standard, may also be used instead of $\Delta E_{CMC}(1:1)$, for example $\Delta E_{CMC}(2:1)$. The use of $\Delta E_{CMC}(a:b)$ values, where a=1 or 2 and b=1, has the advantage that by the selection of a and b also the human perception can be taken into account. Alternatively, $\Delta E$ as defined in EN ISO 11664-4 which generally defines the L*a*b* color space may be used. Also these metrics are well-defined standard metrics and are therefore well understood. In yet other embodiments, the color values may be converted to greyscale values, for example by calculating a greyscale value gs for each measurement point according to gs = (R + G + B)/3, where R, G and B are red, green and blue values, respectively, averaging the greyscale values over the respective measurement point groups and calculating differences between the averaged values of adjacent point groups. In case the measurement data indicates the transmission the same calculation as explained above for greyscale values may be used.

The measurement data may be obtained by conventional measurement devices, for example the UTM 5064 device (uniformity of luminous transmittance) as supplied by AD engineering.

In some embodiments where the color is used to calculate the scalar values, nevertheless in addition to the color the measurement data may also indicate the transmission of the gradient spectacle lens at the plurality of measurement points. The transmission, preferably averaged over the measurement point groups, may be displayed to a user in addition to e.g. displaying the scalar values or color information. This gives additional information to a user.

For evaluation, the scalar values obtained may be normalized, for example such that the highest scalar value has a value of 1 (or 100%). This facilitates handling of the data, for example the use of generic threshold values as explained below. However, the scalar values may also be evaluated without such a normalization, for example by setting thresholds depending on a maximum value of the scalar values.

As mentioned briefly above, evaluating the spectacle lens based on the scalar values may include comparing the scalar values to one or more thresholds. A scalar value above a threshold indicates a high difference in the measurement data and therefore a transition region where a high color gradient is present, whereas a scalar value defined below a respective threshold indicates a low difference. In this way, various areas may be identified, for example transition areas between certain positions along the at least one line and areas outside the transition area. These areas can be converted in widths with unit of measure in mm and compared with the values (mm) of recorded standard targets and a PASS/FAIL method may be adopted the evaluate the difference of width areas using +/-3mm of tolerance. For example, in case of a typical gradient lens with a darker top and a lighter bottom, a bottom area a transition area and a top area may be identified. The positions of the area boundaries, which may be where the scalar value crosses the threshold, may then be compared to nominal values for a respective lens type under examination.

Some types of lenses, for example so called Halo lenses which have a lighter inner side and a darker outer side, or so called FOOD lenses which have darker bottom and top parts separated by a lighter inner part, may have more than one transition areas along the at least one line, and the same or different thresholds may be used for different transition areas. The evaluation for different transition areas may also be separated to perform a more precise analysis for each transition areas. In particular, the scalar values may then be normalized for each transition area separately, and in some embodiments the same threshold value may be used for each (separately normalized) transition area. In other embodiments, different threshold values may be used.

In a preferred embodiment, the same threshold value may be used for all normalized scalar values, for example a threshold value between 0.7 and 0.9 (70% and 90%). This makes evaluation easier. In other embodiments, different threshold values may be used for different lens types.

In some embodiments, nominal values for the positions of the area boundaries mentioned above may be stored for different lens types. In other embodiments, they may be input manually. In some embodiments, the lens type may be provided together with the measurement data, for example read by a corresponding measurement device based on a label of the lens.

As mentioned above, the lens is positioned such that the at least one line coincides with a gradient direction. For some kind of lenses like the above mentioned Halo lenses, the at least one line may run essentially through the center of the lens. This ensures that the width of the areas (dark, light, transition) can be reproducibly measured.

In some embodiments, to assist an operator, a curve representing the color values may be displayed together with the measurement data along the line. Moreover, in some embodiments color curves as mentioned along the at least one line may be displayed in a color map to give the operator additional information.

Some embodiments may include a smoothing of the curve represented by the scalar values, for example by applying a low pass filtering. Smoothing the curve may reduce effects from measurement noise and small deviations. In other embodiments, a curve without smoothing may be evaluated to monitor small scale variations of the differences of measurement data.

In addition to evaluating gradient of a spectacle lens based on one or more threshold values, a deviation of the curve represented by the scalar values may be compared with an ideal curve, either for the whole curve or only for a specific portion of the curve, for example a portion above a further threshold value like 0.5 (50%). For example, in this way a deviation from an ideal transition may be determined. The ideal curve for a transition may be a Gaussian curve (distribution), and a deviation from the curve between the curve given by the scalar values and the Gaussian curve (distribution) may for example be determined according to the following formula:

$$\mathrm{I}_{(GD)} = \frac{\sum_{i=1}^{n} |y_i - y_i'|}{\sum_{i=1}^{n} y_i'}$$

$I_{(GD)}$ is a deviance index from the reference Gaussian curve. The numerator calculates the sum of the absolute differences between the reference Gaussian curve ($y_i'$ values) and the scalar values $y_i$, e.g. $\Delta E_{CMC}$ (1:1) values, in a graph area with Y (vertical axis) greater than the further threshold value, e.g. 0,5. In the denominator the sum of the Y>0,50 of the G curve is calculated.

The $I_{(GD)}$ index has a value of 0% in case of perfect overlapping scalar values and Gaussian curves (best case).

The $I_{(GD)}$ index has a value of 100% in case of maximum difference between the scalar values and the Gaussian curve (worst case).

In an embodiment, a target curve may comprise or may correspond to the Gaussian curve (distribution). In other embodiments, other predefined target curves may be used.

Based on the deviation from the ideal curve, a quality measure may be obtained and output (for example a low quality value for a high deviation and correspondingly a high quality value for a low deviation). Likewise, a quality value may be generated based on the deviations of the above-mentioned positions of transitions from nominal positions. Based on the quality values, for example a manufactured lens may be accepted or discarded, and/or in case of low quality values, a manufacturing device may be recalibrated.

Therefore, according to another aspect, a method suitable for producing and controlling gradient spectacle lenses is provided, which comprises manufacturing a gradient spectacle lens, and evaluating the gradient spectacle lens with any of the methods discussed above.

Apart from the measurement discussed above, the method may be implemented as software on a computer device, for example in form of an excel sheet adapted to perform the calculations above. Therefore, a computer program comprising instructions which, when the program is executed by a computer, cause the computer to carry out the methods mentioned above (apart from the measurement itself) is provided. The instructions may be stored in a memory of the computer or other storage in form of a computer program. A computer-readable storage medium having stored thereon such a computer program and a data carrier signal carrying the computer program are also provided. Furthermore, a computer program stored on a non-transitory tangible computer readable storage medium, the computer program comprising instructions which, when the program is executed by a computer, cause the computer to carry out the method as explained above is provided. It should be noted that the term "computer" above does not necessarily imply a single entity, but also more devices may be coupled with each other and exchange data to perform the methods above. For example, the scalar values may be computed on one device, which are then sent to another device for evaluation, for example comparison with threshold values.

According to a further aspect, a device, for example a computer, comprising a processor configured to perform the methods above is provided. A system including a measurement device for obtaining the measurement data and the computer, where the measurement device provides the measurement data to the computer, is also provided.

Furthermore, a data processing system comprising a processor and a storage medium coupled to the processor is provided, wherein the processor is adapted to perform the steps of the method discussed above, based on a computer program stored on the storage medium.

"Computer processor" may be simply referred to as a "processor".

"Computer-implemented method" may be simply referred to as "method".

Technical advantages provided by the features of independent claims in view of the cited prior art may relate to the following.

Due to the features of the claimed invention, advantageous combination of evaluating gradient spectacle lenses based on both, transmittance and color may be facilitated.

Further technical advantages of features specified in the dependent claims in view of the cited prior art may relate to the following.

Evaluating the spectacle lens based on comparing a curve defined by the scalar values over position along the at least one line with a target curve can provide more detailed evaluation of the gradient spectacle lenses because deviation from target positions where the scalar values match the target values for color and/or transmission can be precisely characterized.

Advantageously, the target curve may further comprise a Gaussian distribution. A target curve implemented by Gaussian distribution can provide an ideal evaluation metrics, and thus, comparing positions where a curve defined by the scalar values crosses the target curve implemented by Gaussian distribution can further improve the method for evaluating gradient spectacle lenses.

A quality measure for a gradient of the gradient spectacle lens may be advantageously obtained based on the deviation of the curve of scalar values from the target curve providing another level of detail when evaluating the gradient spectacle lens.

Measurement data comprising color and measurement data comprising transmission can advantageously facilitate evaluation of gradient spectacle lenses based on the combination of color and transmission. Obtaining quality measures based on the combination of the measurement data comprising color and transmission may further benefit evaluation of gradient spectacle lenses, and thus, may aid manufacturing of gradient spectacle lenses.

Preferred embodiments will be explained referring to the attached drawings.

Fig. 1 is a block diagram of a system according to an embodiment.

Fig. 2 is a flowchart illustrating a method according to an embodiment.

Figures 3-13, including respective sub-figures (A, B, C, D), are various diagrams used for illustration of the method shown in Fig. 2.

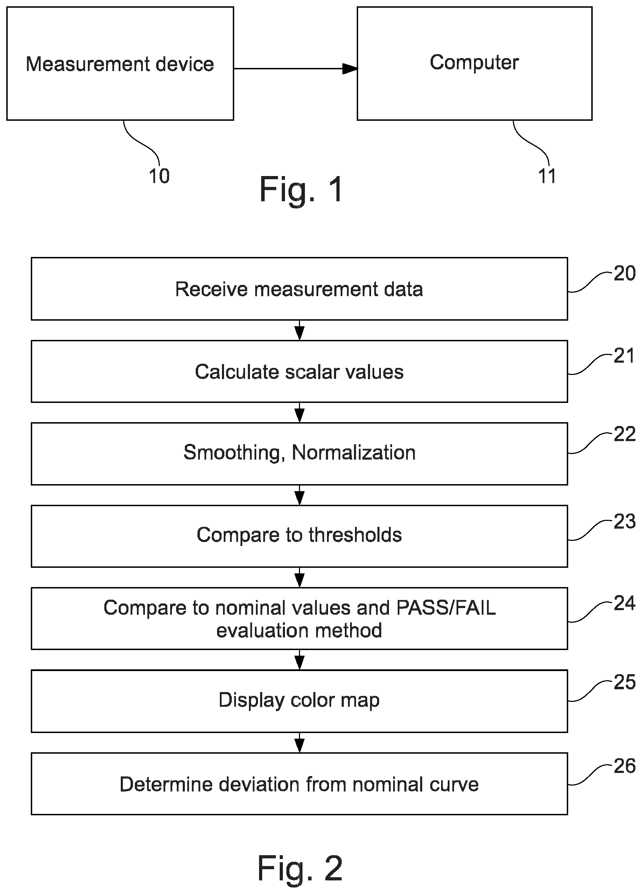

Fig. 1 illustrates a system according to an embodiment. The system of Fig. 1 includes a measurement device 10 and a computer 11. Measurement device 10 is configured to perform measurements of transmission and color of a gradient spectacle lens along at least one line.

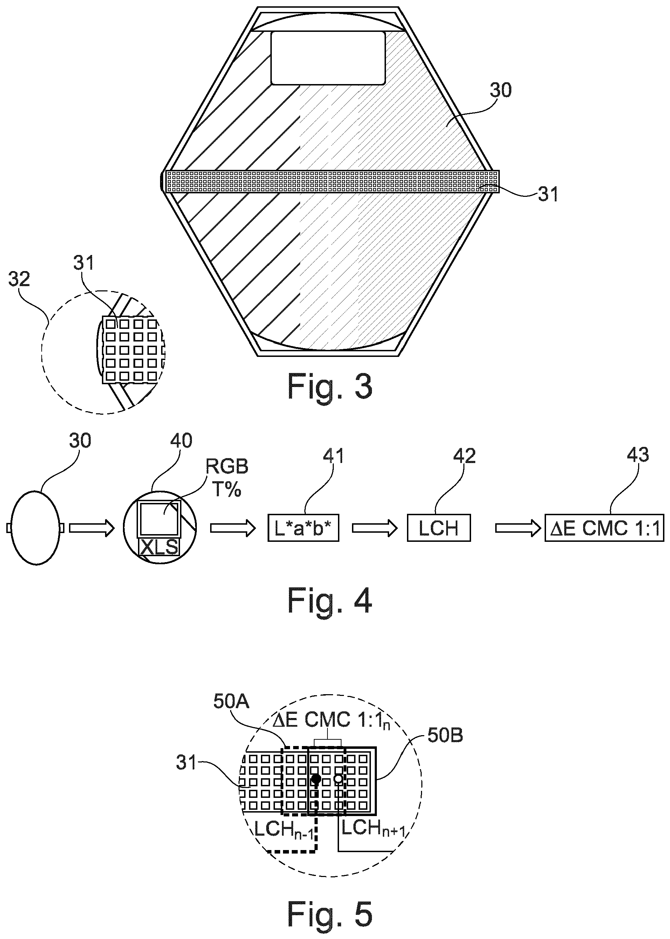

This is illustrated in Fig. 3 showing a gradient spectacle lens 30, where (as can be better seen in inset 32) measurements are performed at measurement points 31 in five parallel lines. The orientation of gradient spectacle lens is such that the lines are parallel to the direction of the gradient, which in Fig. 3 is from left to right. In the embodiment of Fig. 1, measurement device 10 is the UTM measurement device mentioned above, and provides measurement data in form of RGB (red, green, blue) values for colors and a value T for the transmission in percent. Returning to Fig. 1, measurement device 10 provides the measurement data to a computer 11. As mentioned above, computer 11 may be a single computer device or may include a plurality of devices communicating with each other. Computer 11 is configured to perform a method as illustrated in Fig. 2, by programming a processor of computer 11 accordingly.

In Fig. 2, in step 20 the method starts with receiving the measurement data from measurement device 10. Receiving the measurement data may be via a direct connection, via the internet, or by transporting the measurement data on a data carrier.

In step 21, the method comprises a step of calculating scalar values based on adjacent or overlapping point groups of the measurement data. An example will be illustrated referring to Figures 4 and 5.

Fig. 4 shows an example process flow for generating scalar data. Based on the gradient spectacle lens 30, measurement data 40 is obtained in the form of RGB values and transmission, T, values. In the example of Fig. 4, these are provided for each measurement point, for example in form of a table. In the process flow of Fig. 4, this data, by computer 11, is first converted to L*a*b color data 41 and from there to LCh color data 42. Based on the LCh color data 42 then, as scalar values, $\Delta E_{CMC}(1:1)$ scalar values 43 are calculated for adjacent or overlapping point groups.

Fig. 5 shows an example for two measurement point groups 50A, 50B of measurement points 31. In this example, 5 points of each of the 5 lines shown line form point groups, and successive measurement point groups 50A, 50B (also designated $LCH_{n-1}$ and $LCH_{n+1}$ in Fig. 5) overlapping by three points are selected, and a value $\Delta E_{CMC}(1:1)_n$ is calculated and assigned to a region n. Other measurement point groups or also single adjacent points may also be used, but as mentioned above selecting point groups with a plurality of points provide an averaging and reduce measurement noise.

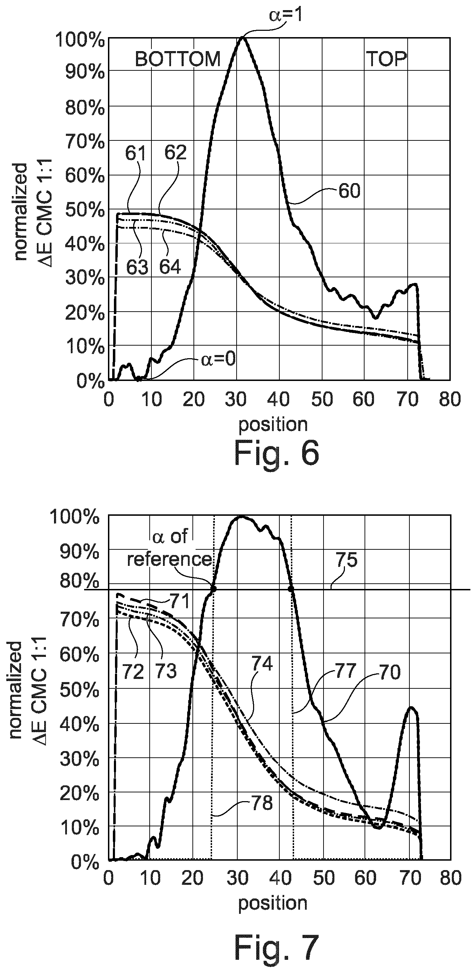

Returning to Fig. 2, at 22 the scalar values may be further processed. One example is a normalization, where the largest scalar value is assigned a value of 1 or 100 %. Fig. 6 shows an example measurement graph for a curve 60 of normalized $\Delta E_{CMC}(1:1)$ values $\alpha$ with a range from $\alpha=0$ to $\alpha=1$ (100%) from bottom to top of a gradient lens. Curves 61 to 64 illustrate the original measurement data, where a curve 61 shows the transparency T, curve 62 shows the red (R) component, curve 63 shows the green (G) component, and curve 64 shows the blue (B) component. As can be seen, curve 60 reaches at its peak ($\alpha=1$) about in the middle of the transition of curves 61-64 from comparatively high to comparatively low values. Therefore, curve 60 can be used as a quantitative measure of the gradient. The ripples that can be seen on the left and right sides of the curves are due to measurement noise or tinting tolerances. Due to such ripples, in some embodiments scalar values under 30% of a maximum scalar value are disregarded.

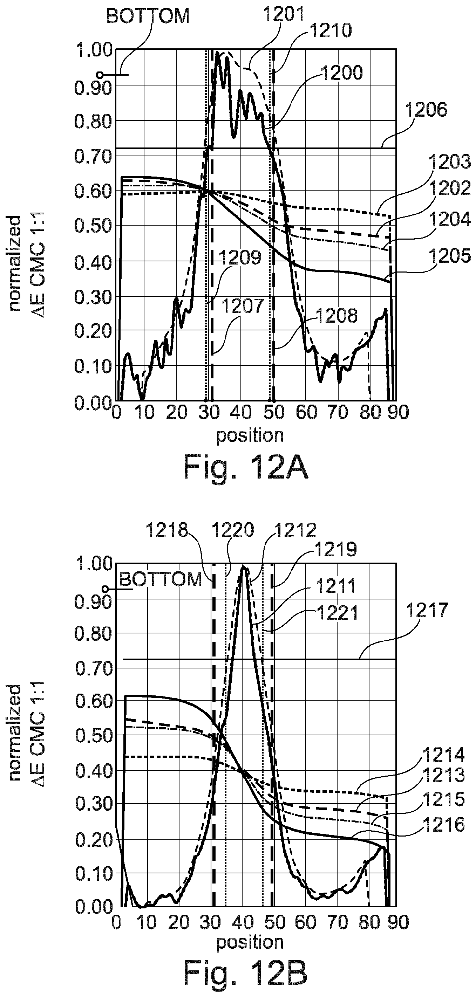

Smoothing is illustrated in Fig. 12A where a curve 1200 of the scalar values calculated is smoothed by filtering to a curve 1201, and in Fig. 12B, where a curve 1211 of scalar values is smoothed to a curve 1212. The remainder of Figures 12A and 12B will be explained further below.

Returning to Fig. 2, the scalar values, possibly after normalization or smoothing, in step 23 are compared to threshold values. A simple example is shown in a measurement graph Fig. 7, where a curve 70 represents the scalar values, a curve 71 represents the measure transmission, and curves 72-74 represent measured red, green and blue values, respectively. A threshold value represented by a line 75 is set as $\alpha$ of reference. The points where curves 70 cross line 75 are marked by dashed vertical lines 78, 77, which represent boundaries between areas of the gradient lens. To the left of line 78, at the "bottom" there is a light, highly transparent area, between lines 78 and 77 there is the transition area with high differences between successive groups of measurement points, and to the right of line 77 there is the dark area at the top of the lens. Therefore, using curve 70 and by selecting a corresponding value for the $\alpha$ of reference according to line 75 the corresponding sections of the lens may be quantitatively determined.

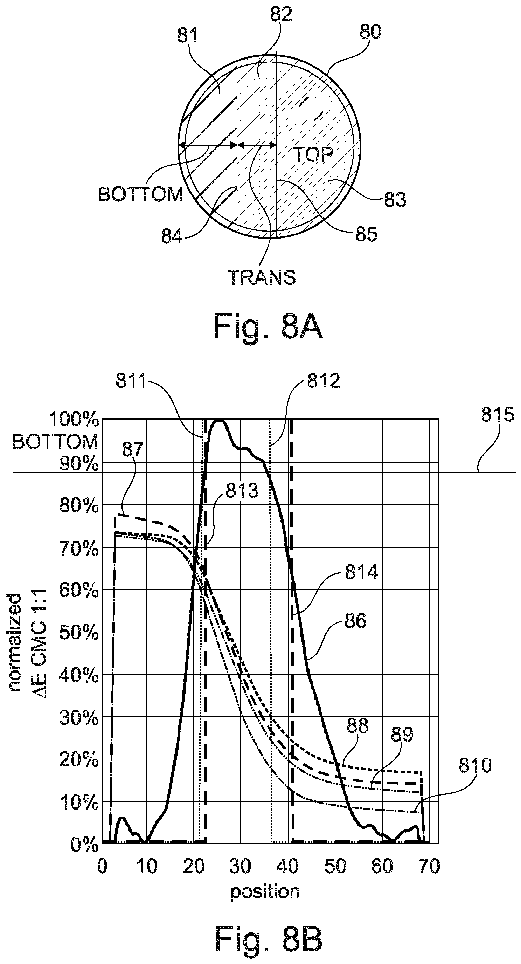

In step 24 of Fig. 2, the positions where the scalar values cross the threshold (s) (in case of Fig. 7 the positions indicated by line 77, 78) may be compared to nominal values. This will be illustrated with respect to Figures 8A, 8B, 9A, 9B and 10A-10D for different types of gradient lenses. A PASS/FAIL method as explained above is then employed.

Fig. 8A shows a standard gradient lens 80 with a lighter bottom area 81, a transition area 82 and a darker top area 83, where the lighter bottom area 81 is separated from transition area 82 by a line 84 and transition area 82 is separated from top area 83 by a line 85 (the lines are only for illustration and not present in the actual lens). In use, the lighter bottom area 81 is worn at the bottom, and the darker area is worn at the top, even if they are represented left to right in Fig. 8A (and similar representations are used in the following Figures)

Fig. 8B shows an example measurement graph of the lens of Fig. 8A. A curve 86 shows the normalized $\Delta E_{CMC}(1:1)$ values, as has been explained previously for curve 60 and 70 of Figs. 6 and 7. A curve 87 shows the transmission, and curves 88-810 show the measurement result for red, green and blue components, respectively, similar to what has been explained for curve 61-64 of Fig. 6.

A line 815 denotes the threshold value, corresponding to line 75 of Fig. 7. Vertical dashed lines 811 and 812 illustrate where curve 86 crosses line 815, corresponding to lines 78 and 77 of Fig. 7.

Vertical lines 813 and 814 show nominal positions of the boundaries of the transition area. As can be seen, the position of dashed line 811 in this example coincides well with line 813, whereas dashed line 812 deviates from line 814. The amount of the deviation may be taken as a measure of the quality of the lens. The position of lines 813 and 814 may for example be determined based of specifications for the respective lens or by measuring a lens (e.g. master lens) which has been evaluated as correct by other means, for example the conventional measurement using a ruler.

The threshold value as indicated by line 815 is selected such that lines 811 and 812 denote the position of lines 84 and 85 of Fig. 8A, i.e. the boundaries of transition area 82.

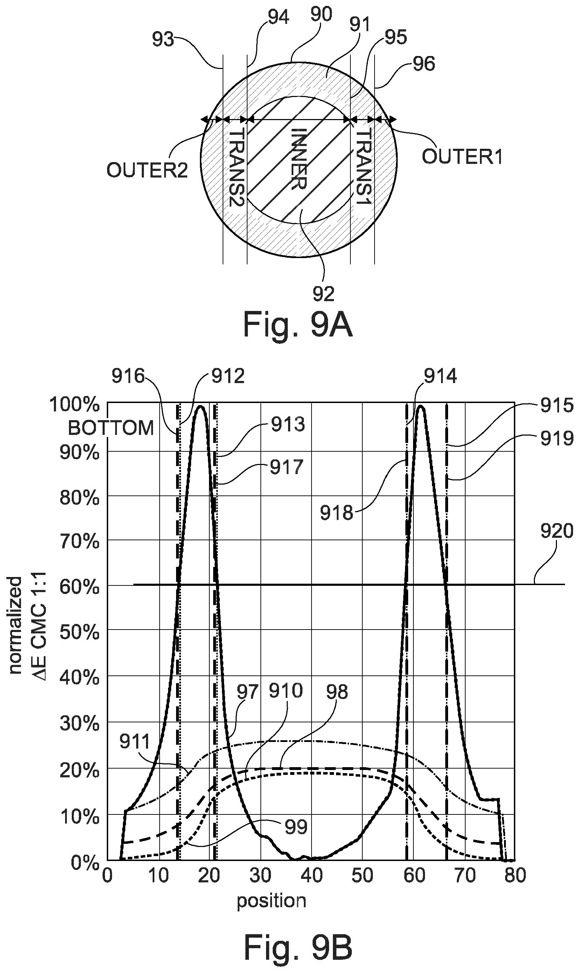

Figures 9A and 9B show an embodiment for a so called Halo lens. Fig. 9A shows an example Halo lens 90 having an essentially circular lighter inner area 92 and a ring-shaped darker outer area 91, separated by a ring-shaped transition area. When measuring along a line, as shown in Fig. 9A two transition areas TRANS1 and TRANS2 appear to be present, once when transitioning from ring-shaped darker outer area 91 to circular lighter inner area 92 and the other when transitioning back from circular lighter inner area 92 to ring-shaped darker outer area 91, which are in fact parts of the same ring-shaped transition area which is crossed twice. A transition area TRANS2 is bounded by lines 93 and 94, and a transition area TRANS1 is bounded by line 95 and 96 in Fig. 9A.

Fig. 9B shows a corresponding measurement graph. A curve 97 illustrates the normalized $\Delta E_{CMC}(1:1)$ values over position along the measurement lines, a curve 98 illustrates the transmission, and curves 99, 910 and 911 illustrate the red, green and blue values, respectively. As can be seen, curve 97 has two peaks, corresponding to two transition areas TRANS1 and TRANS2, which are crossed when measuring along a line.

A line 920 illustrates a threshold value for the normalized $\Delta E_{CMC}(1:1)$ values. Dashed lines 912, 913 denote where curve 97 crosses line 920 for the first peak (for example ideally corresponding to the positions of lines 93 and 94 of Fig. 9A), and dashed lines 914 and 915 denote where curve 97 crosses line 920 at the second peak, corresponding to the positions of lines 95, 96 of Fig. 9A.

Lines 916 and 917 for the first transition area and lines 918 and 919 for the second transition area denote nominal values. In this case, the nominal values mostly coincide with the measured values, with the exception of line 912 showing a slight deviation from line 916. This is therefore an example where the lens may receive a good quality rating.

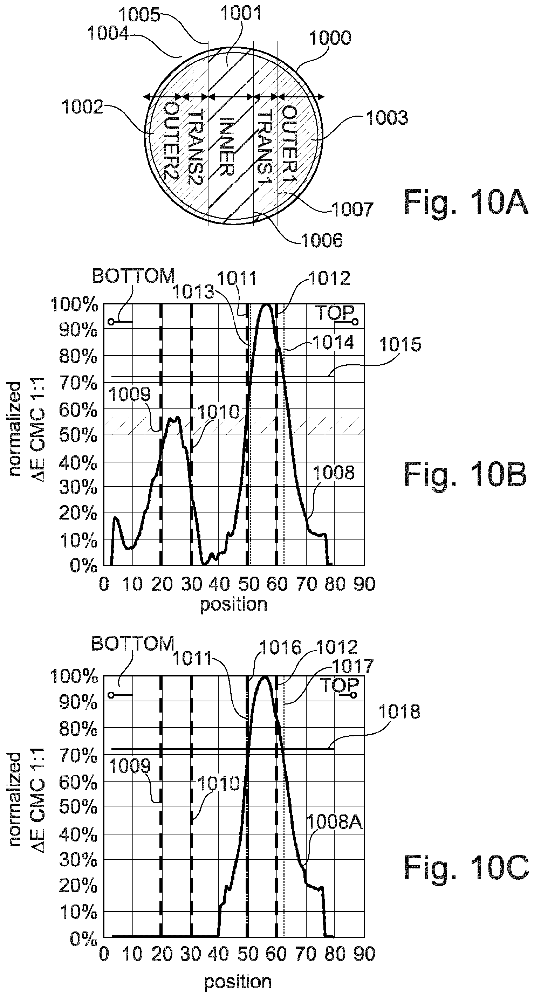

Figures 10A-10B show an example for a lens 1000 with a different kind of coloring. This lens at the top and bottom has dark areas 1002, 1003, and an inner lighter area 1001. In contrast to the lens 900 of Fig. 9A, the areas are not circular, but as shown in Fig. 10A follow each other from top to bottom and extend over the respective width of the lens. The dark area 1002 is separated from inner lighter area 1001 via a transition area trans 2, and inner lighter area 1001 is separated from dark area 1003 by a transition area trans 1.

Lines 1004, 1005 on one side and 1006, 1007 on the other side denote the boundaries of the transition areas.

Fig. 10B shows a first measurement diagram for lens 1000 of Fig. 10A. A curve 1008 shows the normalized $\Delta E_{CMC}(1:1)$ values over position. Lines 1009 and 1010 show nominal positions of the boundary of transition area trans 2 of Fig. 10A, corresponding to the nominal positions of lines 1004, 1005 of Fig. 10A, and lines 1011, 1012 show nominal positions of the boundary of transition area trans 1 of Fig. 10A, i.e. corresponding to the nominal positions of lines 1006, 1007 of Fig. 10A. A nominal position refers to the position according to the design of the lens as intended.

A line 1015 denotes the threshold value when using a single threshold. As can be seen, here only the right peak of curve 1008 intersects line 1015, resulting in dashed lines 1013 and 1014 representing the measured positions of the boundaries of transition area TRANS1, with some deviations from the nominal position 1011, 1012.

For transition area TRANS2, the peak of curve 1008 is lower, and therefore does not intersect line 1015. On the other hand, using a value which intersects both peaks would result in a too broad measured transition area TRANS1 (right peak).

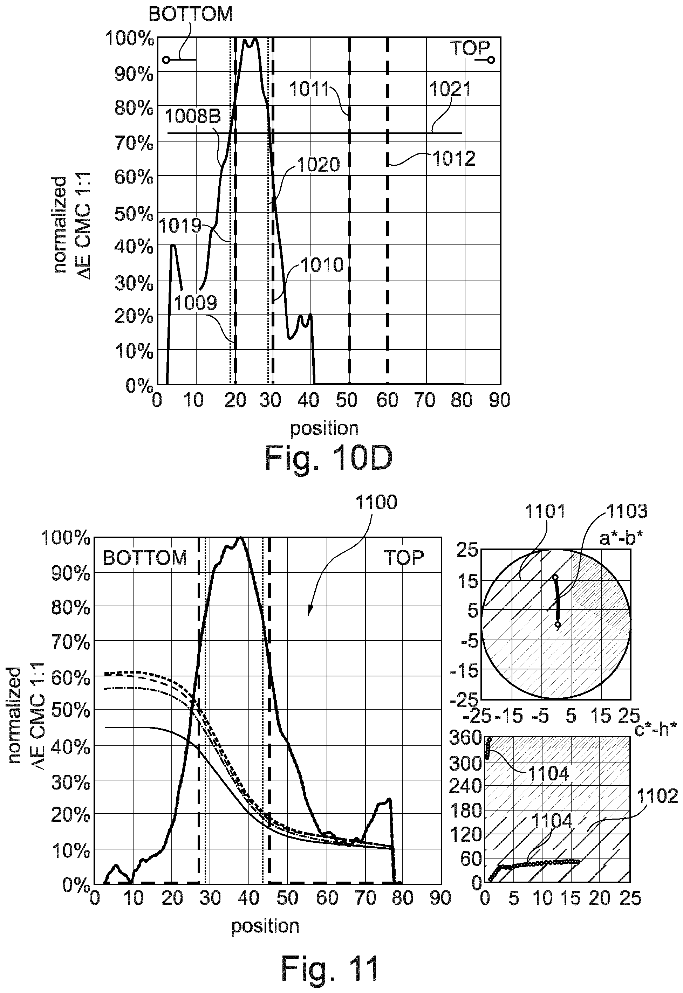

Therefore, in a preferred embodiment shown in Figures 10C and 10D, the peaks are evaluated separately, with different threshold values and/or normalized separately. Features already discussed with reference to Fig. 10B bear the same reference numerals in Figures 10C and 10D and will not be discussed again.

Fig. 10C shows the evaluation for the right peak of curve 1008 of Fig. 10B, the part of the curve corresponding to the right peak being denoted by curve 1008A. A line 1018 corresponds to the reference value, and dashed lines 1016 and 1017 correspond to the positions where curve 1008A crosses line 1018, i.e. the measured positions of the boundaries of transition area TRANS1. The threshold value denoted by line 1018 may correspond to the threshold value denoted by line 1015.

Fig. 10D shows the evaluation for the left peak of curve 1008. The corresponding curve portion is denoted by curve 1008B in Fig. 10D. A line 1021 denotes the threshold value. In the example of Fig. 10B, curve 1008B is normalized to 1 or 100% for its peak value. In this case, effectively the same reference value may be used as in Fig. 10C, but due to the different scaling factors for normalization this also effectively corresponds to using different threshold values. Here, the positions where curve 1008B crosses line 1021 are shown with dashed lines 1019 and 1020, which in this case coincide well with the nominal values according to lines 1009, 1010. In this way, both transition areas may be reliably measured.

Returning to Fig. 2, in step 25 as additional information to an operator, two dimensional graphs of the color coordinates with curves according to the measured values may be displayed in addition to the measurement graphs discussed above. Fig. 11 shows a corresponding embodiment. Here, reference numeral 1100 generally denotes the measurement graph, which may be any of the measurement graphs discussed previously with respect to Fig. 6, 7, 8B, 9B or 10B-10D. In addition, in fields 1101 and 1102 the color coordinates along the lines measured are represented. In field 1101, the color coordinates are shown in terms of a*-b* of the L*a*b color space, and a curve 1103 shows the corresponding values obtained based on the measurement values (red, green, blue values). Field 1102 shows the color as C-h of the LCh color space, and a curve 1104 shows the color along the measured one or more lines based on the measurement results. In this way, an operator can better visualize the color transition.

Figures 12A and 12B show the already discussed smoothing of the curve, together with the measurement values and the evaluation. In Fig. 12A, in addition to curves 1200 and 1201 already discussed, a curve 1202 denotes the measured transmission, and curves 1203, 1204 and 1205 denote the measured red, green and blue values. In case of a plurality of lines, these values may be an average for the lines, for example the five lines of Figures 3 and 5.

A line 1206 denotes the threshold values. Both Figures 12A and 12B show example for standard gradient lenses similar to the one shown in Fig. 8A, i.e. with a single transition. In Fig. 12A, lines 1207 and 1208 show the nominal positions of the boundaries of the transition area, and dashed lines 1209, 1210 show the values obtained by measuring where the smoothed curve 1201 crosses line 1206 representing the threshold.

Fig. 12B shows another example, where a curve 1213 denotes the measured transmission, and curves 1214, 1215 and 1216 denote the measurement for the red, green and blue color components. In some embodiments, the smoothing is only used for lenses where the transition area has a certain minimum width, for example at least 10 mm.

A line 1217 denotes the threshold. Lines 1218 and 1219 denote the nominal positions of the transition areas, and dashed lines 1220 and 1221 denote the positions of the boundary as obtained by the measurement. As can be seen, in this case the transition area is smaller than according to the nominal values.

With the above measurements, the position of transition areas may be determined and compared to nominal values. As mentioned above, in addition or alternatively, in step 26 of Fig. 2, the quality of the gradient of the transition area may be determined.

For example, a perfect gradient, in terms of normalized $\Delta E_{CMC}(1:1)$, may correspond to a Gaussian curve, the general formula of which is

$$f(x) = \frac{1}{\sqrt{2\pi\sigma^2}} e^{-\frac{(x-\mu)^2}{2\sigma^2}}$$

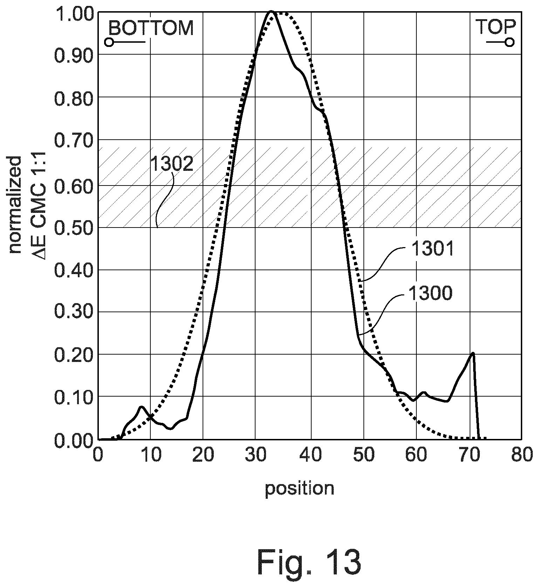

where $\sigma^2$ is the variance and $\mu$ is the center value. For the gradient, $\mu$, as measured form the bottom, corresponds to the width of the bottom + half the width of the transition area (for a standard gradient lens) and $\sigma$ is equal to the width of the transition area x the reference value used x a constant, which may be set to 14/17 The constant that helps to better identify $\sigma$ of the Gaussian curve, and 14/17 has turned out to be a suitable value. The function f gives values corresponding to the $\Delta E_{CMC}(1:1)$ values for positions x (lens diameter/lens height if the lens is squared). This Gaussian curve may be compared to the measured values of nominalized $\Delta E_{CMC}(1:1)$, as shown in Fig. 13.

In Fig. 13, a curve 1300 corresponds to the normalized $\Delta E_{CMC}(1:1)$, and a curve 1301 corresponds to the Gaussian curve (distribution). In some embodiments, if the above formula does not fit, $\sigma$ and $\mu$ may be manually adjusted. For comparing the curves, it is possible to calculate the Deviance index from the reference Gaussian curve as described above. The area (integral) of the curves is evaluated for values greater than a threshold value, for example greater than 0.5, (i.e. above line 1302) may be determined. The deviance index may be translated into a percentage values, and the quality may be measured based on this Deviance index. For example, the quality may be defined as follows:

    0-5% excellent
    5-10% good
    10-15% acceptable
    15-20% mediocre
    >20% very bad

The above threshold values are merely examples, and other values may be selected.

Any one of line 75 in fig. 7, line 815 in fig. 8B, line 920 in fig. 9B, line 1015 in fig. 10B, line 1018 in fig. 10C, line 1021 in fig. 10D, line 1302 in fig. 13 and/or line 1206 in fig. 12 (indicating predetermined threshold values) may be referred to as a target curve. A target curve may comprise curve 1301 corresponding to the Gaussian curve (distribution) as described in the context of fig. 13.

In an example, measurement data 40 illustrated in fig. 5 may be received via a first computer interface (not shown in fig. 5). Scalar values 43 illustrated in fig. 5 may be calculated by a computer processor (not shown in fig. 5). The gradient spectacle lens 30; 80; 90; 1000 in figs. 3, 8, 9 and 10, respectively, may be evaluated by a computer processor (not shown in figs. 3, 8, 9 and 10).

Returning to fig. 5, a region n, a preceding region (n-1) and a subsequent region (n+1) are illustrated in fig. 5 Preceding region (n-1) corresponds to the region where measurement point group 50A is located, and subsequent region (n+1) corresponds to the region where measurement point group 50B is located. In fig. 5, preceding region (n-1) overlaps with the subsequent region (n+1) forming region n , i.e. region n is the region where the preceding region (n-1) and the subsequent region (n+1) overlap... In fig. 5, preceding region (n-1) is indicated by a rectangle marked up by the dashed line and associated with measurement point group 50A. Region (n+1) is indicated in fig. 5 by a rectangle marked up by the solid line and associated with measurement point group 50B. Measurement point group 50A is measured over preceding region (n-1) and r measurement point group 50B is measured over a subsequent region (n+1). Fig. 5 illustrates preceding region (n-1) and subsequent region (n+1) each comprising an array of 5x5 measurement points, wherein the preceding region (n-1) overlaps with the subsequent region (n+1) by an array of 3x5 points defining the overlapping region n, and wherein an array of 2x5 points of the preceding region (n-1) and an array of 2x5 points of the subsequent region (n+1) are outside of the overlapping region n. For example, as illustrated in fig. 5, one scalar value for a region (n) may be calculated based on 5x5+5x5=50 measurement points. And then, a scalar value may be obtained for each position associated with each region (n), thus resulting in a curve of scalar values vs position along a line across the spectacle lens. The position is the center position of region n in a horizontal direction in Fig. 5. A curve of scalar values can be compared to a target curve and quality measures may be derived based on the deviation between the curves.

As illustrated by figs. 4 and 5, the scalar values 43 may represent the difference between the measurement data 40 of the overlapping measurement point groups 50A, 50B of the respective preceding region (n-1) and subsequent region (n+1), each measurement point group 50A, 50B including at least one measurement point of the plurality of measurement points 31, wherein the subsequent region (n+1) may be adjacent to the preceding region (n-1).

As illustrated by figs. 4 and 5, the scalar values 43 represent the difference between the measurement data 40 of the overlapping measurement point groups 50A, 50B, each measurement point group 50A, 50B including twenty five measurement points forming the plurality of measurement points 31, wherein the subsequent region (n+1) overlaps with the preceding region (n-1) by fifteen points of each of the measurement point groups 50A, 50B, and wherein an overlap between the subsequent region (n+1) and the preceding region (n-1) forms an overlapping region (n) comprising said fifteen points, and wherein ten points of each of the measurement point groups 50A, 50B is outside of the overlapping region.

Fig. 5 shows an example, where the at least one line comprises five parallel lines, and each of the adjacent measurement point groups 50A, 50B comprises five measurement points from each of the parallel lines amounting to twenty five measurement points in each measurement point group 50A, 50B.

Fig. 5 shows an example, where the measurement data 40 indicates the color, and the scalar values 43 comprise $\Delta E_{CMC}(1:1)$ values. In other embodiments, the measurement data 40 may indicate the color and the transmission (t), and the scalar values 43 may comprise $\Delta E_{CMC}(1:1)$ or $\Delta E_{CMC}(2:1)$ values and a difference be-

tween the transmission ($\Delta t$) defined by the difference between the measurement data 40.

The curve of scalar values may be compared to any one of target curves described in the context of line 75 in fig. 7, line 815 in fig. 8B, line 920 in fig. 9B, line 1015 in fig. 10B, line 1018 in fig. 10C, line 1021 in fig. 10D, line 1302 in fig. 13 and/or line 1206 in fig. 12. Each line 75 in fig. 7, line 815 in fig. 8B, line 920 in fig. 9B, line 1015 in fig. 10B, line 1018 in fig. 10C, line 1021 in fig. 10D, line 1302 in fig. 13 and/or line 1206 in fig. 12 indicating predetermined threshold values may be referred to as a target curve. In an embodiment, a target curve may also comprise curve 1301 corresponding to the Gaussian curve (distribution) as described in the context of fig. 13.

## Claims

1. A computer-implemented method for evaluating a gradient spectacle lens, comprising:

    receiving measurement data (40) indicating at least one of a color and a transmission of a plurality of measurement points (31) along at least one line across the gradient spectacle lens (30; 80; 90; 1000), wherein the at least one line coincides with a gradient direction of the gradient spectacle lens,
    calculating scalar values (43) representing a difference between the measurement data (40) of adjacent or overlapping measurement point groups (50A, 50B), each measurement point group (50A, 50B) including at least one measurement point of the plurality of measurement points (31), and evaluating the gradient spectacle lens (30; 80; 90; 1000) based on the scalar values,
    **characterized in that** the scalar values form a curve representing a function along a length direction of the at least one line, and **in that** evaluating the gradient spectacle lens comprises comparing the curve of scalar values to at least one threshold value and comparing positions along the length direction of the at least one line where the curve of scalar values crosses the at least one threshold to nominal values.

2. The method of claim 1, **characterized in that** the nominal values define a nominal position of a transition region.

3. The method of claim 1 or 2, **characterized in that** the method further comprises normalizing the curve of scalar values, wherein the at least one threshold value is the same for different lens types.

4. The method of claim 1, **characterized in that** evaluating the spectacle lens based on the curve of scalar values further comprises comparing the curve of scalar values with a target curve.

5. The method of claim 4, **characterized by** further comprising obtaining a quality measure of a gradient of the gradient spectacle lens based on the deviation of the curve of scalar values from the target curve.

6. The method of any one of claims 1-5, **characterized in that** the at least one line comprises a plurality of parallel lines, and each of the adjacent measurement point groups (50A, 50B) comprises at least one measurement point from each of the plurality of lines.

7. The method of any one of claims 1-6, **characterized in that** the measurement data indicates the color, and the scalar values comprise one of $\Delta E_{CMC}(1:1)$ or $\Delta E_{CMC}(2:1)$ values calculated according to ASTM standard D2244-22.

8. The method of any one of preceding claims, **characterized in that** one measurement point group of the measurement point groups (50A, 50B) is located in a preceding region of the gradient spectacle lens and another measurement point group of the measurement point groups (50A, 50B) is located in a subsequent region of the gradient spectacle lens, wherein the subsequent region is adjacent to or overlaps with the preceding region.

9. The method of claim 8, wherein the scalar values (43) represent the difference between the measurement data (40) of the adjacent measurement point groups (50A, 50B), each measurement point group (50A, 50B) including at least one measurement point of the plurality of measurement points (31), wherein the subsequent region (n+1) is adjacent to the preceding region.

10. The method of claim 8 or 9, wherein the scalar values (43) represent the difference between the measurement data (40) of the overlapping measurement point groups (50A, 50B), each measurement point group (50A, 50B) including at least two measurement points of the plurality of measurement points (31), wherein the subsequent region overlaps with the preceding region by at least one point of each of the measurement point groups (50A, 50B), wherein an overlap between the subsequent region and the preceding region forms an overlapping region associated with the region , and wherein at least one point of each of the measurement point groups (50A, 50B) is outside of the overlapping region.

11. A method, comprising: manufacturing a gradient spectacle lens, and evaluating the gradient spectacle lens with the method of any one of claims 1-10.

12. A computer program comprising instructions which, when the computer program is executed by a computer, causes the computer to carry out the method of any one of claims 1-10.

13. A computer-readable storage medium storing the computer program of claim 12.

14. Data carrier signal carrying the computer program of claim 12.

15. A device for evaluating a gradient spectacle lens comprising a processor configured to perform the following steps:

receiving (20) measurement data (40) indicating at least one of color and transmission of a plurality of measurement points (31) along at least one line across a gradient spectacle lens (30; 80; 90; 1000), wherein the at least one line coincides with a gradient direction of the gradient spectacle lens, calculating (21) scalar values (43) representing a difference between the measurement data of adjacent or overlapping measurement point groups (50A, 50B), each measurement point group (50A, 50B) including at least one measurement point of the plurality of measurement points, and evaluating the gradient spectacle lens (30; 80; 90; 1000) based on the scalar values, **characterized in that** the scalar values form a curve representing a function along a length direction of the at least one line, and **in that** evaluating the gradient spectacle lens comprises comparing the curve of scalar values to at least one threshold value and comparing positions along the length direction of the at least one line where curve of scalar values crosses the at least one threshold to nominal values.

**Patentansprüche**

1. Computerimplementiertes Verfahren zur Beurteilung eines Verlaufsbrillenglases, umfassend:
Empfangen von Messdaten (40), die mindestens eines von Farbe und Transmission einer Vielzahl von Messpunkten (31) entlang mindestens einer Linie über das Verlaufsbrillenglas (30; 80; 90; 1000) angeben, wobei die mindestens eine Linie mit einer Verlaufsrichtung des Verlaufsbrillenglases übereinstimmt, Berechnen von Skalarwerten (43), die eine Differenz zwischen den Messdaten (40) benachbarter oder überlappender Messpunktgruppen (50A, 50B) repräsentieren, wobei jede Messpunktgruppe (50A, 50B) mindestens einen Messpunkt der Vielzahl an Messpunkten (31) beinhaltet, und Beurteilen des Verlaufsbrillenglases (30; 80; 90; 1000) auf der Grundlage der Skalarwerte, **dadurch gekennzeichnet, dass** die Skalarwerte eine Kurve bilden, die eine Funktion entlang einer Längsrichtung der mindestens einen Linie repräsentiert, und dass das Beurteilen des Verlaufsbrillenglases das Vergleichen der Kurve der Skalarwerte mit mindestens einem Schwellenwert und das Vergleichen von Positionen entlang der Längsrichtung der mindestens einen Linie, an denen die Kurve der Skalarwerte den mindestens einen Schwellenwert schneidet, mit Nennwerten umfasst.

2. Verfahren nach Anspruch 1, **dadurch gekennzeichnet, dass** die Nennwerte eine Nennposition eines Übergangsbereichs definieren.

3. Verfahren nach Anspruch 1 oder 2, **dadurch gekennzeichnet, dass** das Verfahren ferner das Normalisieren der Kurve der Skalarwerte umfasst, wobei der mindestens eine Schwellenwert für verschiedene Brillenglasarten gleich ist.

4. Verfahren nach Anspruch 1, **dadurch gekennzeichnet, dass** die Beurteilung der Brillengläser auf der Grundlage der Kurve der Skalarwerte ferner das Vergleichen der Kurve der Skalarwerte mit einer Zielkurve umfasst.

5. Verfahren nach Anspruch 4, **dadurch gekennzeichnet, dass** es ferner das Erhalten eines Qualitätsmaßes eines Verlaufs des Verlaufsbrillenglases auf der Grundlage der Abweichung der Kurve der Skalarwerte von der Zielkurve umfasst.

6. Verfahren nach einem der Ansprüche 1 bis 5, **dadurch gekennzeichnet, dass** die mindestens eine Linie eine Vielzahl paralleler Linien umfasst und jede der benachbarten Messpunktgruppen (50A, 50B) mindestens einen Messpunkt aus jeder der Vielzahl von Linien umfasst.

7. Verfahren nach einem der Ansprüche 1 bis 6, **dadurch gekennzeichnet, dass** die Messdaten die Farbe angeben und die Skalarwerte einen der Werte $\Delta E_{CMC}(1:1)$ oder $\Delta E_{CMC}(2:1)$ umfassen, die gemäß der Norm ASTM D2244-22 berechnet werden.

8. Verfahren nach einem der vorhergehenden Ansprüche, **dadurch gekennzeichnet, dass** sich eine Messpunktgruppe der Messpunktgruppen (50A, 50B) in einem vorderen Bereich des Verlaufsbrillenglases befindet und sich eine andere Messpunktgruppe der Mess punktgruppen (50A, 50B) in einem hinteren Bereich des Verlaufsbrillenglases befindet, wobei der hintere Bereich an den vorderen Bereich angrenzt oder sich mit diesem überlappt.

9. Verfahren nach Anspruch 8, wobei die Skalarwerte (43) die Differenz zwischen den Messdaten (40) der benachbarten Messpunktgruppen (50A, 50B) repräsentieren, wobei jede Messpunktgruppe (50A, 50B) mindestens einen Messpunkt der Vielzahl von Messpunkten (31) beinhaltet, wobei der nachfolgende Bereich (n+1) an den vorhergehenden Bereich angrenzt.

10. Verfahren nach Anspruch 8 oder 9, wobei die Skalarwerte (43) die Differenz zwischen den Messdaten (40) der überlappenden Messpunktgruppen (50A, 50B) repräsentieren, wobei jede Messpunktgruppe (50A, 50B) mindestens zwei Messpunkte der Vielzahl von Messpunkten (31) beinhaltet, wobei der nachfolgende Bereich mit dem vorhergehenden Bereich um mindestens einen Punkt jeder der Messpunktgruppen (50A, 50B) überlappt, wobei eine Überlappung zwischen dem nachfolgenden Bereich und dem vorhergehenden Bereich einen dem Bereich zugeordneten überlappenden Bereich bildet und wobei mindestens ein Punkt jeder der Messpunktgruppen (50A, 50B) außerhalb des überlappenden Bereichs liegt.

11. Verfahren, umfassend:
Herstellen eines Verlaufsbrillenglases und Beurteilen des Verlaufsbrillenglases mit dem Verfahren nach einem der Ansprüche 1 bis 10.

12. Computerprogramm, umfassend Anweisungen, die, wenn das Computerprogramm von einem Computer ausgeführt wird, den Computer veranlassen, das Verfahren nach einem der Ansprüche 1 bis 10 auszuführen.

13. Computerlesbares Speichermedium, das das Computerprogramm nach Anspruch 12 speichert.

14. Datenträgersignal, das das Computerprogramm gemäß Anspruch 12 trägt.

15. Vorrichtung zum Beurteilen eines Verlaufsbrillenglases, umfassend einen Prozessor, der zum Durchführen der folgenden Schritte ausgelegt ist:

Empfangen (20) von Messdaten (40), die mindestens eines von Farbe und Transmission einer Vielzahl von Messpunkten (31) entlang mindestens einer Linie über ein Verlaufsbrillenglas (30; 80; 90; 1000) hinweg angeben, wobei die mindestens eine Linie mit einer Gradientenrichtung des Verlaufsbrillenglases übereinstimmt, Berechnen (21) von Skalarwerten (43), die eine Differenz zwischen den Messdaten benachbarter oder überlappender Messpunktgruppen (50A, 50B) repräsentieren, wobei jede Messpunktgruppe (50A, 50B) mindestens einen Messpunkt der Vielzahl von Messpunkten beinhaltet, und

Beurteilen des Verlaufsbrillenglases (30; 80; 90; 1000) auf der Grundlage der Skalarwerte, **dadurch gekennzeichnet, dass** die Skalarwerte eine Kurve bilden, die eine Funktion entlang einer Längsrichtung der mindestens einen Linie repräsentiert, und dass das Beurteilen des Verlaufsbrillenglases das Vergleichen der Kurve der Skalarwerte mit mindestens einem Schwellenwert und das Vergleichen von Positionen entlang der Längsrichtung der mindestens einen Linie, an denen die Kurve der Skalarwerte den mindestens einen Schwellenwert überschreitet, mit Nennwerten umfasst.

## Revendications

1. Procédé mis en œuvre par ordinateur pour l'évaluation d'un verre de lunettes à gradient, comprenant :

   la réception de données de mesure (40) indiquant au moins l'une d'une couleur et d'une transmission d'une pluralité de points de mesure (31) le long d'au moins une ligne à travers le verre de lunettes à gradient (30 ; 80 ; 90 ; 1000), l'au moins une ligne coïncidant avec une direction de gradient du verre de lunettes à gradient, le calcul de valeurs scalaires (43) représentant une différence entre les données de mesure (40) de groupes de points de mesure (50A, 50B) adjacents ou se chevauchant, chaque groupe de points de mesure (50A, 50B) comportant au moins un point de mesure de la pluralité de points de mesure (31), et l'évaluation du verre de lunettes à gradient (30 ; 80 ; 90 ; 1000) sur la base des valeurs scalaires, **caractérisé en ce que** les valeurs scalaires forment une courbe représentant une fonction dans une direction de longueur de l'au moins une ligne, et **en ce que** l'évaluation du verre de lunettes à gradient comprend la comparaison de la courbe de valeurs scalaires à au moins une valeur seuil et la comparaison de positions dans la direction de longueur de l'au moins une ligne, là où la courbe de valeurs scalaires franchit l'au moins un seuil, à des valeurs nominales.

2. Procédé selon la revendication 1, **caractérisé en ce que** les valeurs nominales définissent une position nominale d'une zone de transition.

3. Procédé selon la revendication 1 ou 2, **caractérisé en ce que** le procédé comprend en outre la normalisation de la courbe de valeurs scalaires, dans lequel l'au moins une valeur seuil est la même pour différents types de verres.

4. Procédé selon la revendication 1, **caractérisé en ce que** l'évaluation du verre de lunettes sur la base de la courbe de valeurs scalaires comprend en outre la comparaison de la courbe de valeurs scalaires avec une courbe cible.

5. Procédé selon la revendication 4, **caractérisé en ce qu'**il comprend en outre l'obtention d'une mesure de qualité d'un gradient du verre de lunettes à gradient sur la base de l'écart de la courbe de valeurs scalaires par rapport à la courbe cible.

6. Procédé selon l'une quelconque des revendications 1 à 5, **caractérisé en ce que** l'au moins une ligne comprend une pluralité de lignes parallèles, et chacun des groupes de points de mesure (50A, 50B) adjacents comprend au moins un point de mesure à partir de chaque ligne de la pluralité de lignes.

7. Procédé selon l'une quelconque des revendications 1 à 6, **caractérisé en ce que** les données de mesure indiquent la couleur, et les valeurs scalaires comprennent l'une des valeurs $\Delta E_{CMC}(1:1)$ ou $\Delta E_{CMC}(2:1)$ calculées selon la norme ASTM D2244-22.

8. Procédé selon l'une quelconque des revendications précédentes, **caractérisé en ce qu'**un groupe de points de mesure des groupes de points de mesure (50A, 50B) est situé dans une région précédente du verre de lunettes à gradient et un autre groupe de points de mesure des groupes de points de mesure (50A, 50B) est situé dans une région suivante du verre de lunettes à gradient, la région suivante étant adjacente à la région précédente ou chevauchant celle-ci.

9. Procédé selon la revendication 8, dans lequel les valeurs scalaires (43) représentent la différence entre les données de mesure (40) des groupes de points de mesure (50A, 50B) adjacents, chaque groupe de points de mesure (50A, 50B) comportant au moins un point de mesure de la pluralité de points de mesure (31),
   dans lequel la région suivante (n+1) est adjacente à la région précédente.

10. Procédé selon la revendication 8 ou 9, dans lequel les valeurs scalaires (43) représentent la différence entre les données de mesure (40) des groupes de points de mesure se chevauchant (50A, 50B), chaque groupe de points de mesure (50A, 50B) comportant au moins deux points de mesure de la pluralité de points de mesure (31),

dans lequel la zone suivante chevauche la zone précédente par au moins un point de chacun des groupes de points de mesure (50A, 50B), dans lequel un chevauchement entre la zone suivante et la zone précédente forme une zone de chevauchement associée à la zone, et dans lequel au moins un point de chacun des groupes de points de mesure (50A, 50B) est en dehors de la zone de chevauchement.

11. Procédé, comprenant :

la fabrication d'un verre de lunettes à gradient, et l'évaluation du verre de lunettes à gradient avec le procédé selon l'une quelconque des revendications 1 à 10.

12. Programme informatique comprenant des instructions qui, lorsque le programme informatique est exécuté par un ordinateur, amènent l'ordinateur à effectuer le procédé selon l'une quelconques selon l'une quelconque des revendications 1 à 10.

13. Support de stockage lisible par ordinateur stockant le programme informatique selon la revendication 12.

14. Signal porteur de données portant le programme d'ordinateur de la revendication 12.

15. Dispositif d'évaluation d'un verre de lunettes à gradient comprenant un processeur configuré pour réaliser les étapes suivantes :

la réception (20) de données de mesure (40) indiquant au moins l'une d'une couleur et d'une transmission d'une pluralité de points de mesure (31) le long d'au moins une ligne à travers un verre de lunettes à gradient (30 ; 80 ; 90 ; 1000), l'au moins une ligne coïncidant avec une direction de gradient du verre de lunettes à gradient, le calcul (21) de valeurs scalaires (43) représentant une différence entre les données de mesure de groupes de points de mesure (50A, 50B) adjacents ou se chevauchant, chaque groupe de points de mesure (50A, 50B) comportant au moins un point de mesure de la pluralité de points de mesure, et l'évaluation du verre de lunettes à gradient (30 ; 80 ; 90 ; 1000) sur la base des valeurs scalaires, **caractérisé en ce que** les valeurs scalaires forment une courbe représentant une fonction selon une direction de longueur de l'au moins une ligne, et **en ce que** l'évaluation du verre de lunettes à gradient comprend la comparaison de la courbe de valeurs scalaires à au moins une valeur seuil et la comparaison de positions dans la direction de longueur de l'au moins une ligne, là où la courbe de valeurs scalaires franchit l'au moins un seuil, à des valeurs nominales.

Fig. 1

| Measurement device | → | Computer |

10     11

Receive measurement data   20

Calculate scalar values   21

Smoothing, Normalization   22

Compare to thresholds   23

Compare to nominal values and PASS/FAIL evaluation method   24

Display color map   25

Determine deviation from nominal curve   26

Fig. 2

Fig. 3

Fig. 4

Fig. 5

Fig. 6

Fig. 7

Fig. 8A

Fig. 8B

Fig. 9A

Fig. 9B

Fig. 10A

Fig. 10B

Fig. 10C

Fig. 10D

Fig. 11

Fig. 12A

Fig. 12B

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009109442 A
- JP 2004326018 A
- DE 102013003558 A1